(19) Europäisches Patentamt
European Patent Office
Office européen des brevets

(11) EP 4 564 887 A1

(12) **EUROPEAN PATENT APPLICATION**
published in accordance with Art. 153(4) EPC

(43) Date of publication:
**04.06.2025 Bulletin 2025/23**

(21) Application number: **23851628.0**

(22) Date of filing: **31.07.2023**

(51) International Patent Classification (IPC):
***H04W 24/02*** *(2009.01)*

(52) Cooperative Patent Classification (CPC):
**H04W 24/02**

(86) International application number:
**PCT/CN2023/110192**

(87) International publication number:
**WO 2024/032407 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210947180**

(71) Applicant: **Huawei Technologies Co., Ltd.**
**Shenzhen, Guangdong 518129 (CN)**

(72) Inventors:
- **HOU, Hailong**
  **Shenzhen, Guangdong 518129 (CN)**
- **DENG, Meng**
  **Shenzhen, Guangdong 518129 (CN)**
- **LEI, Chunyang**
  **Shenzhen, Guangdong 518129 (CN)**
- **WANG, Yi**
  **Shenzhen, Guangdong 518129 (CN)**

(74) Representative: **Gill Jennings & Every LLP**
**The Broadgate Tower**
**20 Primrose Street**
**London EC2A 2ES (GB)**

# (54) COMMUNICATION METHOD AND APPARATUS

(57) This application provides a communication method and apparatus. The method includes: A terminal device receives configuration information of a first BWP, where the first BWP is an active BWP of the terminal device; and the terminal device performs measurement without measurement gaps based on an SSB, where a frequency domain resource of the first BWP does not include a frequency domain resource of the SSB, or a frequency domain resource of the first BWP includes a part of frequency domain resources of the SSB. According to the method provided in this application, the terminal device can perform measurement without measurement gaps on the SSB outside the first BWP without interrupting communication and transmission on the first BWP, to improve communication efficiency of the terminal device.

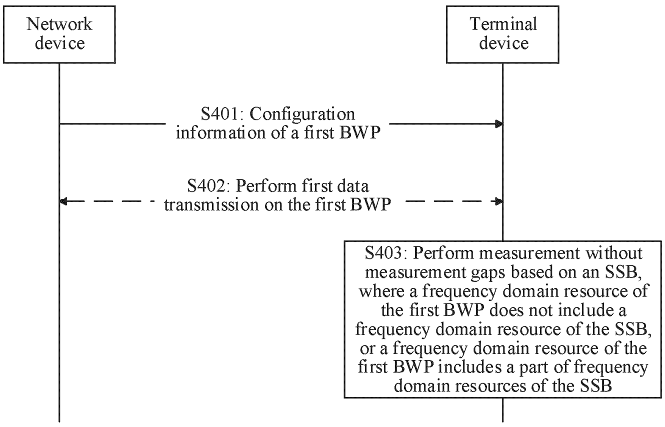


FIG. 4A

EP 4 564 887 A1

## Description

### TECHNICAL FIELD

This application relates to the field of communication technologies, and in particular, to a communication method and apparatus.

### BACKGROUND

To support terminal devices with different bandwidth capabilities, a concept of a bandwidth part (bandwidth part, BWP) is introduced into an NR system. The BWP is a segment of contiguous frequency domain resources, and includes an uplink BWP and a downlink BWP, which are respectively used for uplink transmission and downlink transmission. If a plurality of BWPs are configured for a terminal device, the terminal device can operate on only one of the BWPs at a same moment, and such a BWP is referred to as an active BWP. The terminal device can perform data transmission with a network device only on the active BWP. In other words, a frequency domain resource occupied by the terminal device for each data transmission is in a frequency domain resource range of only one BWP.

Currently, the terminal device may perform related measurement such as channel quality measurement by using a synchronization signal/physical broadcast channel block (SS/PBCH block, SSB). If a frequency domain resource occupied by the SSB is located in the BWP, the terminal device may simultaneously perform data transmission and SSB-based measurement. If a frequency domain resource occupied by the SSB is not completely located in the BWP, the network device configures a measurement gap, and the terminal device measures an SSB outside the BWP with assistance of the measurement gap (Gap). However, data transmission needs to be interrupted, affecting a service transmission rate of the terminal device.

Therefore, how to measure the SSB outside the BWP and improve communication efficiency is an urgent technical problem to be resolved.

### SUMMARY

This application provides a communication method and apparatus, to implement SSB measurement and improve communication efficiency.

According to a first aspect, this application provides a communication method. The method is used to implement a function of a terminal device. For example, the method may be applied to the terminal device or a chip in the terminal device. A specific execution body of the method is not limited in embodiments of this application. Optionally, the method may be jointly implemented by a plurality of functional modules on a terminal device side, and a method performed by each functional module also falls within the protection scope of this application. For example, the method is applied to the terminal device. In this method, the terminal device receives configuration information of a first BWP, where the first BWP is an active BWP of the terminal device; and the terminal device performs measurement without measurement gaps based on a measurement signal, where a frequency domain resource of the first BWP does not include a frequency domain resource of the measurement signal, or a frequency domain resource of the first BWP includes a part of frequency domain resources of the measurement signal.

According to the foregoing method, the terminal device can perform measurement without measurement gaps on a measurement signal outside the active BWP without interrupting signal transmission between the terminal device and a network device, to improve communication efficiency of the terminal device when measurement is implemented.

With reference to the first aspect, in a possible design, the measurement signal may be an SSB, a CSI-RS, or a sounding reference signal (sounding reference signal, SRS).

With reference to the first aspect, in a possible design, the method further includes: receiving measurement configuration information from the network device, where the measurement configuration information does not include configuration information of a measurement gap, or the measurement configuration information includes configuration information of a measurement gap, and the configuration information of the measurement gap indicates that the measurement gap is 0 milliseconds.

With reference to the first aspect, in a possible design, the frequency domain resource of the first BWP and the frequency domain resource of the SSB are located on a same carrier.

With reference to the first aspect, in a possible design, the terminal device performs first data transmission with the network device on the first BWP. A time domain symbol occupied for the first data transmission and a time domain symbol occupied by the SSB overlap, partially overlap, or are adjacent to each other. To be specific, time occupied for performing first data transmission by the terminal device and time occupied for performing measurement without measurement gaps overlap, partially overlap, or are adjacent to each other. Alternatively, the terminal device does not perform radio frequency tuning between the first data transmission and first measurement. Therefore, resource utilization of a communication system can be improved, and the communication efficiency of the terminal device can be improved. With reference to the first aspect, in a possible design, the measurement without measurement gaps includes at least one of the following: channel state information measurement, time-frequency synchronization measurement, radio resource management measurement, radio link monitoring measurement, radio link failure measurement, beam management measurement, and beam failure detection measurement.

With reference to the first aspect, in a possible design, the terminal device supports the measurement without measurement gaps in a first bandwidth, and the first bandwidth includes the frequency domain resource of the first BWP and the frequency domain resource of the SSB. The terminal device does not need to support the measurement without measurement gaps on a frequency domain resource outside the first bandwidth, so that power consumption can be reduced.

With reference to the first aspect, in a possible design, a size of the first bandwidth is less than a maximum bandwidth supported by the terminal device, and/or the first bandwidth is less than a bandwidth size of the carrier on which the terminal device is located.

With reference to the first aspect, in a possible design, the size of the first bandwidth is 20 MHz, 40 MHz, 60 MHz, or 80 MHz.

With reference to the first aspect, in a possible design, the method further includes: The terminal device receives configuration information of the first bandwidth from the network device, where the configuration information of the first bandwidth indicates the size and/or a location of the first bandwidth; or the terminal device determines the first bandwidth according to a first rule, where the first rule indicates a location relationship among the frequency domain resource of the first BWP, the frequency domain resource of the SSB, and a frequency domain range of the first bandwidth.

With reference to the first aspect, in a possible design, the size of the first bandwidth does not exceed a first threshold, and the first threshold is predefined, or the first threshold is configured by the network device. The size of the first bandwidth is limited, so that the terminal device may only need to support the measurement without measurement gaps in a specific range, to reduce power consumption.

With reference to the first aspect, in a possible design, a spacing between the frequency domain resource of the first BWP and the frequency domain resource of the SSB does not exceed a second threshold, and the second threshold is predefined, or the second threshold is configured by the network device. The spacing between the frequency domain resource of the first BWP and the frequency domain resource of the SSB is limited, so that the terminal device may only need to support the measurement without measurement gaps in a specific range, to reduce the power consumption.

With reference to the first aspect, in a possible design, the method further includes: The terminal device sends first capability information to the network device, where the first capability information indicates the first threshold and/or the second threshold supported by the terminal device; or the terminal device sends second capability information to the network device, where the second capability information indicates that the terminal device supports the measurement without measurement gaps. The terminal device may indicate, by using capability information, a bandwidth capability supported by the terminal device, or indicate whether the terminal device supports the measurement without measurement gaps, so that the network device configures the measurement without measurement gaps or the first bandwidth for the terminal device based on the capability of the terminal device, to configure a communication resource more flexibly, and improve the communication efficiency of the terminal device.

With reference to the first aspect, in a possible design, the method further includes: The terminal device receives first configuration information of the measurement without measurement gaps; and that the terminal device performs measurement without measurement gaps based on an SSB includes: The terminal device performs measurement without measurement gaps based on the SSB in a first time period indicated by the first configuration information. The terminal device may not support the measurement without measurement gaps in time outside the first time period. A time period in which the terminal device performs measurement without measurement gaps is limited to configure, based on a service requirement of the terminal device, the first time period in which the terminal device performs measurement without measurement gaps, to reduce the power consumption of the terminal device.

With reference to the first aspect, in a possible design, a start moment of the first time period is an end moment of a second time period, an end moment of the first time period is a start moment of a third time period, and the second time period and the third time period are not used by the terminal device to perform data transmission.

With reference to the first aspect, in a possible design, the first configuration information further indicates the second time period and the third time period.

With reference to the first aspect, in a possible design, the first configuration information indicates at least one of a periodicity, a length, and a time domain offset of the first time period.

According to a second aspect, this application provides a communication method. The method is used to implement a function of a network device side. For example, the method may be applied to a network device or a chip in the network device. This embodiment of this application does not limit a specific execution body of the method. Optionally, the method may be jointly implemented by a plurality of functional modules on the network device side, and a method performed by each functional module also falls within the protection scope of this application. For example, the method is applied to the network device. In the method, the network device sends first configuration information to a terminal device, where a first time period indicated by the first configuration information is used to perform measurement without measurement gaps based on a measurement signal; and the network device performs first data transmission with the terminal device on a first BWP, where the first BWP is an active BWP of the terminal device, and a frequency domain resource of the first BWP does not include a frequency domain resource of the measurement signal, or a frequency domain resource of the first BWP includes a part of frequency domain resources of the measurement signal.

According to the foregoing method, the network device may configure the terminal device to perform measurement without measurement gaps on the measurement signal outside the active BWP without interrupting signal transmission with the network device, so that communication efficiency of the terminal device is improved when the measurement is implemented. In addition, the terminal device needs to support only the measurement without measurement gaps in the first time period, to improve the communication efficiency. The terminal device does not need to support the measurement without measurement gaps outside the first time period, to reduce power consumption.

With reference to the second aspect, in a possible design, the measurement signal may be an SSB, a CSI-RS, or a sounding reference signal (sounding reference signal, SRS).

With reference to the second aspect, in a possible design, the method further includes: The network device sends the first configuration information to the terminal device, where the first configuration information indicates the first time period, and the first time period is used to perform measurement without measurement gaps based on the measurement signal.

With reference to the second aspect, in a possible design, the method further includes: The network device sends measurement configuration information to the terminal device, where the measurement configuration information does not include configuration information of a measurement gap, or the measurement configuration information includes configuration information of a measurement gap, and the configuration information of the measurement gap indicates that the measurement gap is 0 milliseconds.

With reference to the second aspect, in a possible design, the frequency domain resource of the first BWP and the frequency domain resource of the SSB are located on a same carrier.

With reference to the second aspect, in a possible design, a time domain symbol occupied for the first data transmission and a time domain symbol occupied by the SSB overlap, partially overlap, or are adjacent to each other.

With reference to the second aspect, in a possible design, the measurement without measurement gaps includes at least one of the following: channel state information measurement, time-frequency synchronization measurement, radio resource management measurement, radio link monitoring measurement, radio link failure measurement, beam management measurement, and beam failure detection measurement.

With reference to the second aspect, in a possible design, the method further includes: The network device sends configuration information of a first bandwidth to the terminal device, where the configuration information of the first bandwidth indicates a size and/or a location of the first bandwidth, where the first bandwidth includes the frequency domain resource of the first BWP and the frequency domain resource of the SSB. The terminal device does not need to support the measurement without measurement gaps on a frequency domain resource outside the first bandwidth, so that the power consumption can be reduced.

With reference to the second aspect, in a possible design, a size of the first bandwidth is less than a maximum bandwidth supported by the terminal device, and/or the first bandwidth is less than a bandwidth size of the carrier on which the terminal device is located.

With reference to the second aspect, in a possible design, the size of the first bandwidth is 20 MHz, 40 MHz, 60 MHz, or 80 MHz.

With reference to the second aspect, in a possible design, the size of the first bandwidth does not exceed a first threshold, and the first threshold is predefined, or the first threshold is configured by the network device.

With reference to the second aspect, in a possible design, a spacing between the frequency domain resource of the first BWP and the frequency domain resource of the SSB does not exceed a second threshold, and the second threshold is predefined, or the second threshold is configured by the network device.

With reference to the second aspect, in a possible design, the method further includes: The network device receives first capability information from the terminal device, where the first capability information indicates the first threshold and/or the second threshold supported by the terminal device; or the network device receives second capability information from the terminal device, where the second capability information indicates that the terminal device supports the measurement without measurement gaps. The network device may configure the measurement without measurement gaps or the first bandwidth for the terminal device based on the capability of the terminal device, to configure a communication resource more flexibly, and improve the communication efficiency of the terminal device.

With reference to the second aspect, in a possible design, a start moment of the first time period is an end moment of a second time period, an end moment of the first time period is a start moment of a third time period, and the second time period and the third time period are not used by the terminal device to perform data transmission.

With reference to the second aspect, in a possible design, the first configuration information further indicates the second time period and the third time period.

With reference to the second aspect, in a possible design, the first configuration information indicates at least one of a periodicity, a length, and a time domain offset of the first time period.

According to a third aspect, an embodiment of this application provides a communication apparatus. The communication apparatus may be a terminal device, a module that can implement a function on a terminal device side, or a chip that can be disposed inside the terminal device. The communication apparatus has a function of implementing the first aspect. For example, the communication apparatus includes a corresponding module, unit, or means (means) for performing a part or all of the steps in the first aspect. The function, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a network device. The processing unit may be configured to perform some internal operations of the communication apparatus. Functions performed by the processing unit and the communication unit may correspond to the first aspect and the possible designs of the first aspect.

For example, the communication apparatus is the terminal device or the chip in the terminal device, and includes the communication unit and the processing unit. The communication unit is configured to receive configuration information of a first bandwidth part BWP, where the first BWP is an active BWP of the terminal device. The processing unit is configured to perform measurement without measurement gaps based on a synchronization signal block SSB. A frequency domain resource of the first BWP does not include a frequency domain resource of the SSB, or a frequency domain resource of the first BWP includes a part of frequency domain resources of the SSB.

In a possible design, the communication apparatus includes a processor, and may further include a transceiver. The transceiver is configured to receive and send a signal, and the processor completes the method according to any one of the possible designs or implementations of the first aspect by using the transceiver. The communication apparatus may further include one or more memories. The memory may be coupled to the processor, and the memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor, and the processor may be coupled to a memory. The memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

According to a fourth aspect, an embodiment of this application provides a communication apparatus. The communication apparatus may be a network device, a module that can implement a function on a network device side, or a chip that can be disposed inside the network device. The communication apparatus has a function of implementing the second aspect. For example, the communication apparatus includes a corresponding module, unit, or means for performing the operations in the second aspect. The module, the unit, or the means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive uplink information from a terminal device. The processing unit may be configured to perform some internal operations of the communication apparatus. Functions performed by the processing unit and the communication unit may correspond to the operations in the second aspect above.

For example, a communication apparatus includes a communication unit and a processing unit. The processing unit is configured to send first configuration information to a terminal device by using the communication unit, where the first configuration information indicates a first time period, and the first time period is a time period used by the terminal device to perform measurement without measurement gaps based on an SSB. The communication unit is further configured to perform first data transmission with the terminal device on a first BWP. The first BWP is an active BWP of the terminal device, and a frequency domain resource of the first BWP does not include a frequency domain resource of the SSB, or the frequency domain resource of the first BWP includes a part of frequency domain resources of the SSB.

In a possible design, the communication apparatus includes a processor, and may further include a transceiver. The transceiver is configured to receive and send a signal, and the processor completes the method according to any one of the possible designs or implementations of the second aspect by using the transceiver. The communication apparatus may further include one or more memories. The memory may be coupled to the processor, and the memory may store a computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect above.

**In** a possible design, the communication apparatus includes a processor, and the processor may be coupled to a memory. The memory may store a computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect above.

In a possible design, the communication apparatus includes a processor and an interface circuit. The processor is configured to: communicate with another apparatus through the interface circuit, and perform the method according to any one of the possible designs or implementations of the second aspect.

It may be understood that, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, an embodiment of this application provides a communication system. The communication system includes the communication apparatus according to the third aspect and the communication apparatus according to the fourth aspect.

According to a sixth aspect, embodiments of this application provide a computer-readable storage medium. The computer storage medium stores computer-readable instructions. When a computer reads and executes the computer-readable instructions, the computer is enabled to implement the method in any one of the possible designs of the first aspect or the second aspect above.

According to a seventh aspect, an embodiment of this application provides a computer program product. When a computer reads and executes the computer program product, the computer is enabled to implement the method according to any one of the possible designs of the first aspect and the second aspect.

According to an eighth aspect, an embodiment of this application provides a chip. The chip includes a processor. The processor is coupled to a memory to read and execute a software program stored in the memory, to implement the method in any one of the possible designs of the first aspect or the second aspect above.

## BRIEF DESCRIPTION OF DRAWINGS

FIG. 1 is a diagram of a communication system to which this application is applicable;

FIG. 2A is a diagram of a relationship between a BWP and an SSB;

FIG. 2B is a diagram of another relationship between a BWP and an SSB;

FIG. 3 is a diagram of a measurement gap;

FIG. 4A is a schematic flowchart of a communication method according to this application;

FIG. 4B is a diagram of a location relationship between a first BWP and an SSB according to this application;

FIG. 4C is a diagram of another location relationship between a first BWP and an SSB according to this application;

FIG. 5A is a diagram of a first bandwidth according to this application;

FIG. 5B is a diagram of another first bandwidth according to this application;

FIG. 6 is a schematic flowchart of another communication method according to this application;

FIG. 7 is a schematic flowchart of still another communication method according to this application;

FIG. 8 is a diagram of an apparatus according to this application; and

FIG. 9 is a diagram of another apparatus according to this application.

## DESCRIPTION OF EMBODIMENTS

The following describes in detail embodiments of this application with reference to the accompanying drawings of the specification.

Embodiments of this application may be applied to various mobile communication systems, for example, a 5th generation (the 5th generation, 5G) mobile communication network or a new radio (new radio, NR) system, a 4G mobile communication network or a long term evolution (long term evolution, LTE) system, and another communication system such as a future communication system. This is not specifically limited herein.

FIG. 1 is a diagram of a communication system to which this application is applicable. The system includes at least one network device, for example, a network device shown in FIG. 1. The system may further include at least one terminal device, for example, a terminal device shown in FIG. 1. The network device may communicate with the terminal device through a radio link, to exchange information. It may be understood that, the network device and the terminal device may also be referred to as communication devices.

In embodiments of this application, the terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip) disposed in the foregoing device. The terminal device may also be referred to as a terminal, user equipment (user equipment, UE), an access terminal, or the like. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), internet of things, virtual reality (virtual reality, VR), augmented reality (augmented reality, AR), industrial control (industrial control), industrial sensing, self-driving (self-driving), telemedicine (remote medical), a smart grid (smart grid), smart furniture, a smart office, a smart wearable, smart surveillance, smart transportation, a smart city (smart city), an uncrewed aerial vehicle, and a robot. In embodiments of this application, an apparatus configured to implement a function of the terminal device may be a terminal device; or may be an apparatus that can support the terminal device in implementing the function, for example, a chip system. The apparatus may be installed in the terminal device or used in matching with the terminal device. The terminal device in this application may be a legacy (legacy) terminal device, a reduced capability (reduced capability, REDCAP) terminal device, an enhanced reduced capability (enhanced reduced capability, eREDCAP) terminal device, or a further reduced capability (further reduced capability, fREDCAP) terminal device. The legacy terminal device may be a legacy capability terminal device, a normal capability terminal device, or a high capability terminal device, or may be referred to as a normal (normal) terminal device. In this application, the legacy terminal device may include an NR enhanced mobile broadband (enhanced mobile broadband, eMBB) terminal device. The NR eMBB terminal device supports a large bandwidth and has a high processing capability, and the REDCAP terminal device is a frequency range (frequency range, FR) 1 20 MHz/FR 2 100 MHz terminal device defined in 3rd generation partnership project (the 3rd generation partnership project, 3GPP) release-17 (release-17, Rel-17).

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CD-UP entity). The CU-CP entity and the CD-UP entity may be coupled to the DU, to jointly complete a function of an access network device. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined component or component that can implement a function of the access network device. The apparatus may be installed in the network device. In embodiments of this application, the chip system may include a chip, or may include a chip and another discrete component. In embodiments of this application, the network device is used as an example to describe the technical solution.

The terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of obj ects. For example, a first threshold and a second threshold are merely used to distinguish between different thresholds, and do not indicate sizes, content, different priorities, different importance, or the like of the two thresholds.

The following describes some terms in embodiments of this application, to facilitate understanding of a person skilled in the art.

(1) Bandwidth part (bandwidth part, BWP)

To support terminal devices with different bandwidth capabilities and reduce power consumption of the terminal devices, a concept of a BWP is introduced into NR. The BWP is a segment of contiguous frequency domain resources in frequency domain, and includes an uplink BWP and a downlink BWP, which are respectively used for uplink transmission and downlink transmission. In an initial access phase, a network device configures an initial uplink BWP and an initial downlink BWP for a terminal device. After entering an RRC connected mode, the network device additionally configures one or more uplink BWPs and downlink BWPs dedicated to the terminal device for the terminal device.

According to a protocol, uplink channel or signal transmission is performed in the uplink BWP, and downlink channel or signal transmission is performed in the downlink BWP. If the terminal device receives a plurality of BWP configurations, the terminal device can operate on only one of the BWPs at a same moment, and the BWP is referred to as an active BWP (active BWP). Currently, it is agreed that the terminal device can perform data transmission with the network device only by using the active BWP. In other words, a frequency resource corresponding to each time of data transmission of the terminal device can be in a frequency resource range corresponding to only one BWP. It should be noted that, in evolution of a subsequent version or in another communication system, the active BWP may also have different names. This is not limited herein.

(2) Synchronization signal block (synchronization signal/PBCH block, SSB)

In NR, when accessing a network device, a terminal device performs time and frequency synchronization with the network device by using an SSB, and obtains broadcast information. The SSB includes a synchronization signal, a physical broadcast channel, and the like. The synchronization signal includes a primary synchronization signal (Primary synchronic signal, PSS) and a secondary synchronization signal (Second synchronic signal, SSS). The terminal device completes the time and frequency synchronization with the network device by using the PSS and the SSS, and obtains a physical layer cell identifier (physical layer cell ID, PCI). The physical broadcast channel (physical broadcast channel, PBCH) mainly carries broadcast information, including a master information block (Master information block, MIB) from a higher layer and timing-related information from a physical layer.

The SSB may be further used for channel quality measurement, radio resource management (radio resource management, RRM) measurement, radio link monitoring (radio link monitoring, RLM), beam management (beam management, BM) measurement, and beam failure detection (beam failure detection, BFD) measurement. For ease of description, the following SSB-based measurement is collectively referred to as SSB measurement.

As described above, the terminal device can perform data transmission with the network device only by using an active BWP. In this case, when the BWP includes the SSB, as shown in FIG. 2A, the terminal device may perform both SSB measurement and data transmission. When the BWP does not include the SSB, as shown in FIG. 2B, the terminal device needs to switch to perform SSB measurement outside the BWP, for example, perform SSB measurement with assistance of a measurement gap (gap).

(3) Measurement gap (gap)

A network device sends configuration information of a measurement gap to a terminal device. As shown in FIG. 3, outside the measurement gap, the terminal device may perform data transmission with the network device within a BWP range. Within the measurement gap, the network device does not perform data transmission with the terminal device, in other words, the network device neither receives data sent by the terminal device nor sends data to the terminal device. Therefore, the terminal device may perform SSB measurement outside a BWP in a time period T2, and does not need to transmit data in a range of an active BWP. In T1 and T3, the terminal device may perform radio frequency retuning (RF retuning). It should be noted that the terminal device determines, based on a radio frequency capability and a baseband capability of the terminal device, whether the radio frequency retuning is required. If the radio frequency capability and the baseband capability of the terminal device can support measurement of an SSB outside the BWP, the terminal device may not require the radio frequency retuning, and time periods T1 and T3 are used as guard intervals.

When the terminal device switches to perform SSB measurement outside the BWP, data transmission with the network device needs to be stopped. Therefore, the data transmission is interrupted, and communication efficiency is affected. Alternatively, the network device needs to configure an additional measurement signal in the active BWP, for example, an additional SSB or channel state information-reference signal (channel state information-reference signal, CSI-RS), so that the terminal device performs measurement based on the additional measurement signal. Additional resource overheads cause a decrease in a network capacity and spectral efficiency, and affect a service transmission rate of the terminal device. However, according to a communication method provided in this application, no additional reference signal needs to be configured for the terminal device, to save communication resources and improve the communication efficiency of the terminal device.

It should be noted that the communication method provided in this application is not limited to SSB-based measurement, and may be further applied to a scenario of CSI-RS-based or sounding reference signal (sounding reference signal, SRS)-based measurement. It may be understood that an embodiment of this application provides a method, so that the terminal device can measure a first reference signal outside a BWP, and a service transmission rate of the terminal device and a spectrum of a communication system can be increased. The first reference signal may be an SSB, a CSI-RS, or an SRS. For ease of description, the following uses an example in which the first reference signal is the SSB for description. The following method may also be applied to the CSI-RS and the SRS. In embodiments provided in this application, unless otherwise specified, "transmission" includes sending and/or receiving.

FIG. 4A is a schematic flowchart of a communication method according to an embodiment of this application. The method includes the following steps.

S401: A network device sends configuration information of a first BWP to a terminal device, and correspondingly, the terminal device receives the configuration information of the first BWP from the network device.

The first BWP is an active BWP of the terminal device; or the first BWP is a BWP on which the terminal device performs data transmission with the network device.

Optionally, S402: The network device performs first data transmission with the terminal device on the first BWP.

S403: The terminal device performs measurement without measurement gaps based on an SSB, where a frequency domain resource of the first BWP does not include a frequency domain resource of the SSB, or a frequency domain resource of the first BWP includes a part of frequency domain resources of the SSB.

In the communication method provided in this application, the terminal device can perform measurement without measurement gaps on the SSB outside the active BWP without interrupting communication with the network device, to improve communication efficiency of the terminal device.

For S401, the network device sends the configuration information of the first BWP to the terminal device, and correspondingly, the terminal device receives the configuration information of the first BWP from the network device.

The first BWP is the active BWP of the terminal device; or the first BWP is the BWP on which the terminal device performs data transmission with the network device. The configuration information of the first BWP may be carried in a system information block 1 (system information block 1, SIB1), radio resource control (radio resource control, RRC) dedicated signaling, media access control (media access control control element, MAC CE), or DCI signaling. The network device may configure the first BWP as the active BWP of the terminal device, and perform data transmission with the terminal device by using the active BWP.

For S402, the network device performs first data transmission with the terminal device on the first BWP, where the transmission includes sending and/or receiving.

The terminal device and the network device may send and/or receive data in a frequency domain range of the active BWP. Step S402 is an optional step, and a sequence of S402 and S403 is not limited in this application.

Optionally, the network device sends DCI to the terminal device on the first BWP, where the DCI indicates the terminal device to perform uplink transmission and/or downlink transmission on a first time-frequency resource in the first BWP. For example, the network device may schedule, by using the DCI, the terminal device to perform first data transmission. Further, the terminal device may determine, based on the DCI, the first time-frequency resource for performing first data transmission, and perform first data transmission on the first time-frequency resource.

For S403, the terminal device performs measurement without measurement gaps based on the SSB, where the frequency domain resource of the first BWP does not include the frequency domain resource of the SSB, or the frequency domain resource of the first BWP includes a part of frequency domain resources of the SSB.

FIG. 4B is a diagram of a location relationship between the first BWP and the SSB according to this application. The frequency domain resource of the first BWP does not include the frequency domain resource of the SSB. FIG. 4C is a diagram of another location relationship between the first BWP and the SSB according to this application. The frequency domain resource of the first BWP includes a part of frequency domain resources of the SSB, but does not include all the frequency domain resources of the SSB. For ease of understanding, FIG. 4B and FIG. 4C show possible location relationships between the first BWP and the SSB. Specific locations of the first BWP and the SSB are not limited in this application.

The measurement without measurement gaps (measurement without measurement gaps) refers to measurement performed without a measurement gap (measurement gap). For the measurement without measurement gaps, the network device may not configure a measurement gap for the terminal device, or may configure a measurement gap of 0 ms for the terminal device.

In an existing design, when the terminal device measures the SSB outside the frequency domain range of the active BWP, the terminal device needs to apply the measurement gap. In an SSB measurement process, the data transmission on the active BWP is interrupted. However, the data transmission does not need to be interrupted when the terminal device performs measurement without measurement gaps, and the terminal device may also measure the SSB outside the first BWP when first data transmission is performed on the first BWP, to improve the communication efficiency. Specifically, the measurement without measurement gaps may be configured in the following two manners.

In a first implementation, the terminal device receives measurement configuration information from the network device, where the measurement configuration information does not include configuration information of the measurement gap. In other words, when the network device does not configure the measurement gap for the terminal device, the terminal device is indicated to perform measurement without measurement gaps. Further, the terminal device may determine to perform measurement without measurement gaps. In this implementation, signaling resources occupied by the configuration information of the measurement gap can be reduced, and network resource consumption can be reduced.

In a second implementation, the terminal device receives measurement configuration information from the network device, where the measurement configuration information includes configuration information of the measurement gap, and the configuration information of the measurement gap indicates that the measurement gap is 0 milliseconds (ms). Further, the terminal device may determine to perform measurement without measurement gaps on the SSB. For example, a candidate value of 0 ms may be added to information about a measurement gap length. When the measurement gap length configured by the network device for the terminal device is 0 ms, the terminal device is indicated to perform measurement without measurement gaps. In this implementation, a same signaling format may be used when the network device configures the measurement gap and/or the measurement without measurement gaps for different terminal devices. For the terminal device, the configuration information may be parsed based on a same set of algorithms, to reduce processing complexity.

Optionally, a time domain unit occupied by the terminal device for performing first data transmission and a time domain unit occupied for performing measurement without measurement gaps overlap, partially overlap, or are adjacent to each other. Specifically, a time domain symbol occupied for the first data transmission and a time domain symbol occupied by the SSB overlap, partially overlap, or are adjacent to each other. In other words, the terminal device may perform SSB measurement when performing first data transmission, or may perform SSB measurement on a next symbol after the first data transmission is completed. The terminal device may perform SSB measurement without a gap before and after first data transmission is performed. It may also be understood that the terminal device does not perform radio frequency tuning between the first data transmission and first measurement. The communication efficiency of the terminal device can be improved through the measurement without measurement gaps.

The frequency domain resource of the first BWP does not include the frequency domain resource of the SSB, or the frequency domain resource of the first BWP includes a part of frequency domain resources of the SSB. In an existing design, the terminal device can perform measurement without measurement gaps only when the frequency domain resource of the first BWP includes all the frequency domain resources of the SSB. However, according to the communication method provided in this application, the terminal device can perform measurement without measurement gaps in a scenario in which the frequency domain resource of the first BWP does not include all the frequency domain resources of the SSB. Optionally, the frequency domain resource of the first BWP and the frequency domain resource of the SSB are located on a same carrier. In other words, the first BWP corresponds to the SSB, the terminal device performs data transmission on the first BWP, and the first BWP does not include all the frequency domain resources of the SSB. The terminal device may perform measurement without measurement gaps according to the method provided in this application.

The measurement without measurement gaps includes at least one of the following: channel state information measurement, time-frequency synchronization measurement, radio resource management measurement, radio link monitoring measurement, radio link failure measurement, beam management measurement, and beam failure detection measurement. The terminal device may perform at least one of the foregoing types of measurement in a manner of measurement without measurement gaps, and the terminal does not need to transmit data, to improve the communication efficiency.

In the communication method provided in this application, a bandwidth capability of the terminal device may support performing first data transmission on the first BWP, and may support performing measurement without measurement gaps on the SSB, to reduce transmission interruption. In a possible design, the terminal device performs first data transmission and measurement without measurement gaps in a first bandwidth, and the first bandwidth includes the frequency domain resource of the first BWP and the frequency domain resource of the SSB. The first bandwidth is a frequency domain resource range in which the terminal device can support performing measurement without measurement gaps. The first bandwidth may also be referred to as an operating bandwidth or a measurement bandwidth. Optionally, a size of the first bandwidth is less than a maximum bandwidth supported by the terminal device, and/or the first bandwidth is less than a bandwidth size of the carrier on which the terminal device is located.

Optionally, a radio frequency range of the terminal device includes the first bandwidth, in other words, a radio frequency part of the terminal device operates in the first bandwidth. Therefore, the terminal device does not need to perform radio frequency tuning when performing measurement without measurement gaps in the first bandwidth. Therefore, there is no data interruption. There are two implementations of an operating bandwidth of a baseband part of the terminal device. In one implementation, the baseband part of the terminal device operates in a bandwidth of the active BWP. In the other implementation, the baseband part of the terminal device operates in the first bandwidth. The first implementation helps reduce processing complexity of the terminal device and reduce power consumption of the terminal device. The second implementation helps maintain unification of an operating bandwidth of the radio frequency part and the operating bandwidth of the baseband part of the terminal device, and helps reduce impact on an implementation architecture of the terminal device and reduce complexity of the terminal device.

Each functional module of the terminal device usually includes the radio frequency (radio frequency, RF) part and the baseband (baseband, BB) part. The radio frequency part usually further includes modules such as an antenna array, a filter, a radio frequency transceiver, a power amplifier, and a multiplexer/converter. The baseband part usually further includes modules such as an analog-to-digital converter (analog-to-digital converter, ADC)/digital-to-analog converter (digital-to-analog converter, DAC), a fast Fourier transform (Fast Fourier Transform, FFT) module, or an inverse fast Fourier transform (Inverse Fast Fourier Transform, IFFT) module. It should be noted that baseband parts and radio frequency parts of different terminal devices may be slightly different. This is not limited herein. Therefore, an operating bandwidth of the terminal device may be considered as the operating bandwidth of the radio frequency part and/or the operating bandwidth of the baseband part of the terminal device. That the terminal device sets a first bandwidth of the terminal device based on the bandwidth of the active BWP or the first bandwidth may be considered as that the terminal device sets a bandwidth of a related functional module based on the bandwidth of the active BWP or the first bandwidth, for example, a module such as a filter, an ADC/DAC, or an FFT/IFFT module.

Specifically, the terminal device determines the first bandwidth in the following two manners.

In a first manner, the terminal device receives configuration information of the first bandwidth from the network device, where the configuration information of the first bandwidth indicates the size and/or a location of the first bandwidth.

In a second manner, the terminal device determines the first bandwidth according to a first rule, where the first rule indicates a location relationship among the frequency domain resource of the first BWP, the frequency domain resource of the SSB, and a frequency domain range of the first bandwidth. As shown in FIG. 5A, for example, the first rule may specify that when a lowest frequency of the frequency domain resource of the SSB is lower than a lowest frequency of the first BWP, the frequency domain range of the first bandwidth includes frequencies from the lowest frequency of the frequency domain resource of the SSB to a highest frequency of the first BWP. As shown in FIG. 5B, when a highest frequency of the frequency domain resource of the SSB is higher than a highest frequency of the first BWP, the frequency domain range of the first bandwidth includes frequencies from a lowest frequency of the first BWP to the highest frequency of the frequency domain resource of the SSB. In this case, the terminal device may determine the first bandwidth according to the first rule with reference to the frequency domain resource of the first BWP and the frequency domain resource of the SSB. It should be noted that FIG. 5A and FIG. 5B are examples for ease of understanding. According to the method provided in this embodiment of this application, for different location relationships between the frequency domain resource of the first BWP and the frequency domain resource of the SSB, for example, when the frequency domain resource of the first BWP and the frequency domain resource of the SSB partially overlap, the frequency domain range of the first bandwidth may also be determined according to the first rule.

For the terminal device, a larger operating bandwidth of the terminal device consumes more power.

A size of the operating bandwidth of the terminal device and power consumption are in the following relationship. Power consumption of the terminal device when the bandwidth is 100 MHz is used as a baseline. When the bandwidth of the terminal device is reduced to X MHz, the power consumption of the terminal device is reduced to:

$$\text{Scaling of X MHz} = 0.4 + 0.6 \times \frac{X - 20}{80}$$

For example, when a value of X is 40, the power consumption is reduced to 55% of that when the bandwidth is 100 MHz. When the value of X is 60, the power consumption is reduced to 70% of that when the bandwidth is 100 MHz. When the value of X is 80, the power consumption is reduced to 85% of that when the bandwidth is 100 MHz. It can be learned that a larger operating bandwidth of the terminal device indicates higher power consumption of the terminal device. Therefore, if the terminal device maintains an operating bandwidth greater than that of the active BWP, the power consumption increases. To avoid a significant increase in the power consumption of the terminal device, the first bandwidth may be limited. In a possible implementation, the size of the first bandwidth does not exceed a first threshold, and the first threshold is predefined, or the first threshold is configured by the network device. For example, if the first threshold is predefined as 80 MHz in a protocol, the terminal device may set the first bandwidth of the terminal device to a value not exceeding 80 MHz, and the terminal device may set the first bandwidth with reference to a radio frequency capability and/or a baseband capability of the terminal device, to implement a more flexible setting. For another example, the network device may indicate the first threshold by using a configuration message, and may configure and update the first threshold by using the configuration message, to perform real-time adjustment based on a capacity and efficiency of a communication system. The configuration message may be a broadcast message, and may be used to implement dynamic configuration for a plurality of terminal devices in an area. The configuration message may alternatively be a terminal device-specific message, and may be used to perform refined control for a specific terminal device.

Further, the size of the first bandwidth may be set to 20 MHz, 40 MHz, 60 MHz, or 80 MHz. This can avoid excessive energy consumption caused by a case in which the terminal device needs to detect and send a signal in a large frequency domain range due to an excessively large first bandwidth of the terminal device. In addition, 20 MHz, 40 MHz, 60 MHz, or 80 MHz is a typical channel bandwidth, and a structure design such as a filter corresponding to the channel bandwidth is more mature. The terminal device can reduce implementation complexity, and has less impact on an existing protocol and a structure design of the terminal device. For example, in a scenario with low complexity and a low power consumption requirement, the first bandwidth of the terminal device may be set to 20 MHz or 40 MHz, so that energy consumption of the terminal device is reduced when specific communication efficiency is sacrificed. However, in a deployment scenario with a high requirement on communication efficiency and performance, the first bandwidth of the terminal device may be set to 60 MHz or 80 MHz, to ensure that the terminal device can perform measurement without measurement gaps in a large frequency domain range, so as to improve the communication efficiency.

In a possible implementation, if the size of the first bandwidth does not exceed the first threshold, the terminal device can perform measurement without measurement gaps on the SSB outside a range of the first BWP when receiving and sending data in the range of the first BWP. Otherwise, the terminal device cannot receive or send data in the range of the first BWP and perform measurement without measurement gaps on the SSB outside the range of the first BWP.

In a possible implementation, a first spacing between the frequency domain resource of the first BWP and the frequency domain resource of the SSB does not exceed a second threshold of Y MHz. If the first spacing does not exceed Y MHz, the terminal device can perform measurement without measurement gaps on the SSB outside the range of the first BWP when receiving and sending data in the range of the first BWP. Otherwise, the terminal device cannot receive or send data in the range of the first BWP and perform measurement without measurement gaps on the SSB outside the range of the first BWP. The first spacing may be a frequency domain spacing between lowest frequencies of the frequency domain resource of the first BWP and the frequency domain resource of the SSB, or may be a frequency domain spacing between highest frequencies of the frequency domain resource of the first BWP and the frequency domain resource of the SSB, or may be a frequency domain spacing between a highest frequency of the frequency domain resource of the first BWP and a lowest frequency of the frequency domain resource of the SSB, or may be a frequency domain spacing between a highest frequency of the frequency domain resource of the SSB and a lowest frequency of the frequency domain resource of the first BWP, or may be a frequency domain spacing between center frequencies of the frequency domain resource of the first BWP and the frequency domain resource of the SSB. The first spacing is limited to control the frequency domain resource of the first BWP and the frequency domain resource of the SSB to be in a specific frequency domain range, so that a frequency domain range in which the terminal device maintains communication can be reduced, and the power consumption of the terminal device can be reduced. The second threshold is predefined, or the second threshold is configured by the network device. For a method for configuring the second threshold, refer to the method for configuring the first threshold. Further, the first threshold and the second threshold may be separately applied, or may be applied in combination. This is not limited in this application.

In a possible design, the network device may further perform configuration with reference to a capability of the terminal device. For example, the terminal device sends first capability information to the network device, where the first capability information indicates the first threshold and/or the second threshold supported by the terminal device, and the network device configures the measurement without measurement gaps and/or the first bandwidth for the terminal device based on the first capability information. For another example, the terminal device sends second capability information to the network device, where the second capability information indicates that the terminal device supports the measurement without measurement gaps, and the network device configures the measurement without measurement gaps for the terminal device based on first information. For another example, the terminal device sends third capability information to the network device, where the third capability information indicates a size of the first bandwidth supported by the terminal device, the bandwidth capability of the terminal device, or a size of the first bandwidth recommended by the terminal device, and the network device configures the first BWP and/or the SSB for the terminal device based on first information. The terminal device may report capability information by using the first information, and the network device may configure the terminal device based on the first information, so that a network resource is more appropriately used and the communication efficiency of the terminal device is improved.

As described above, a frequency domain range for communication performed by the terminal device may be limited by using the first threshold and/or the second threshold. As shown in FIG. 6, this application provides a communication method, so that a terminal device determines, based on a bandwidth capability of the terminal device, whether to perform measurement without measurement gaps. For a terminal device whose bandwidth capability can support the measurement without measurement gaps, communication efficiency can be improved, and for a terminal device whose bandwidth capability cannot support the measurement without measurement gaps, energy consumption can be reduced.

S601: A network device sends configuration information of a first BWP to a terminal device, and correspondingly, the terminal device receives the configuration information of the first BWP from the network device, where the first BWP is an active BWP of the terminal device.

Optionally, S602: The network device performs first data transmission with the terminal device on the first BWP, where the transmission includes sending and/or receiving.

Optionally, S603: The terminal device determines a first bandwidth, where the first bandwidth includes a frequency domain resource of the first BWP and a frequency domain resource of an SSB.

The first bandwidth is configured by the network device, or the first bandwidth is determined according to a first rule. For a specific meaning and a configuration manner of the first bandwidth, refer to the foregoing detailed descriptions.

S604: When the first bandwidth meets a first threshold and/or a second threshold, the terminal device performs first data transmission in the first bandwidth and performs measurement without measurement gaps based on the SSB. The frequency domain resource of the first BWP does not include the frequency domain resource of the SSB, or the frequency domain resource of the first BWP includes a part of frequency domain resources of the SSB.

In this embodiment of this application, only the first threshold may be applied, only the second threshold may be applied, or the first threshold and the second threshold may be applied. For specific meanings and configuration manners of the first threshold and the second threshold, refer to the foregoing detailed descriptions.

S605: When the first bandwidth does not meet a first threshold and/or a second threshold, the terminal device performs measurement with measurement gaps.

In an implementation, the terminal device performs measurement with measurement gaps. The measurement with measurement gaps means that measurement is performed in a measurement gap, and data transmission needs to be interrupted in a measurement process. Alternatively, S605 may be understood as that when determining that the first bandwidth does not meet the first threshold and/or the second threshold, the terminal device no longer performs measurement without measurement gaps, but performs measurement by using a CSI-RS in the first BWP, or performs measurement with measurement gaps on an SSB outside the first BWP.

In a possible implementation, the terminal device may determine the first threshold and/or the second threshold based on a capability of the terminal device. For example, the terminal device receives configuration information of the first bandwidth from the network device, where the configuration information of the first bandwidth indicates a size and/or a location of the first bandwidth, and the terminal device determines whether the first bandwidth meets the first threshold and/or the second threshold, and further determines whether to perform measurement without measurement gaps in the first bandwidth.

In another possible implementation, the terminal device determines the first bandwidth according to the first rule. For a definition of the first rule, refer to the foregoing specific descriptions. The terminal device determines whether the first bandwidth meets the first threshold and/or the second threshold, and further determines whether to perform measurement without measurement gaps in the first bandwidth.

It should be noted that, steps S604 and S605 are optional steps. For a terminal device, one of the steps may be performed after determining whether the first bandwidth meets the first threshold and/or the second threshold, and the two steps do not need to be both performed.

According to the communication method provided in this embodiment of this application, the terminal device may perform measurement without measurement gaps in the first bandwidth, and a frequency domain range in which the terminal device needs to support communication is limited, so that the terminal device can improve communication efficiency while reducing power consumption.

If the terminal device maintains a measurement bandwidth greater than a bandwidth of the active BWP, negative impact such as increased power consumption and increased processing complexity of the terminal device is caused. To further reduce energy consumption of the terminal device, the terminal device applies the foregoing communication method for the measurement without measurement gaps in a time range. Specifically, refer to a schematic flowchart of a communication method shown in FIG. 7.

S701: A network device sends configuration information of a first BWP to a terminal device, and correspondingly, the terminal device receives the configuration information of the first BWP from the network device, where the first BWP is an active BWP of the terminal device.

Optionally, S702: The network device performs first data transmission with the terminal device on the first BWP, where the transmission includes sending and/or receiving.

S703: The network device sends first configuration information of measurement without measurement gaps to the terminal device, and correspondingly, the terminal device receives the first configuration information from the network device, where the first configuration information indicates a first time period for performing measurement without measurement gaps.

S704: The terminal device performs measurement without measurement gaps based on an SSB in the first time period, where a frequency domain resource of the first BWP does not include a frequency domain resource of the SSB, or a frequency domain resource of the first BWP includes a part of frequency domain resources of the SSB.

The terminal device performs measurement without measurement gaps in the first time period, and needs to perform communication only on the first BWP outside the first time period, and does not need to support the measurement without measurement gaps. This can improve communication efficiency, reduce power consumption of the terminal device, and extend a lifespan of the terminal device.

An execution sequence of S701 to S703 is not limited in this application. For terms in S701 to S704, refer to the foregoing definitions and related descriptions. The following describes the first time period in detail. The first time period is used by the terminal device to perform measurement without measurement gaps. In other words, in the first time period, the terminal device supports measurement of an SSB outside the first BWP, and does not need to interrupt the first data transmission.

In a possible implementation, as shown in FIG. 8, the network device may further reserve a second time period T2 and a third time period T3 for the terminal device. A start moment of the first time period T1 is an end moment of the second time period, an end moment of the first time period is a start moment of the third time period, and T2 and T3 are not used by the terminal device to perform data transmission. In other words, T2 and T3 are used by the terminal device to perform radio frequency tuning. In this case, T2 and T3 may be determined based on time required for the radio frequency retuning of the terminal device. As described above, the terminal device may determine, based on a capability of the terminal device, whether the radio frequency tuning is required. If radio frequency tuning is not performed, the terminal device may also support the measurement of the SSB outside the first BWP. In this case, the terminal device does not need to perform radio frequency tuning in T2 and T3, T2 and T3 are used only as guard time periods, and the terminal device does not perform first data transmission in T2 and T3.

Specifically, the second time period and the third time period may alternatively be indicated by the first configuration information, or may be indicated by another first message, or may be predefined in a protocol. The first configuration information and/or the first message may be carried in a SIB, an RRC message, a MAC CE, or DCI signaling.

A method for configuring the first time period may be indicated in an explicit manner, or may be indicated in an implicit manner.

In a possible implementation, the first configuration information includes at least one of a periodicity, a length, and a time domain offset of the first time period. For example, the first configuration information indicates the periodicity, the length, and the time domain offset of the first time period. The terminal device may determine a specific time domain configuration of the first time period based on the first configuration information, and perform measurement without measurement gaps in the first time period. Further, the first configuration information further includes at least one of periodicities, lengths, and time domain offsets of the second time period and the third time period, and the terminal device may determine, based on the first configuration information, not to perform data transmission in the second time period or the third time period. In the explicit indication manner, information about the three time periods may be flexibly configured, to implement personalized configuration.

In another possible implementation, the first configuration information includes configuration information of the second time period and the third time period, and may specifically include at least one of periodicities, lengths, and time domain offsets of the second time period and the third time period. The terminal device determines the first time period based on the second time period and the third time period. For example, the terminal device uses the end moment of the second time period as the start moment of the first time period, and uses the start moment of the third time period as the end moment of the first time period. In the implicit indication manner, fewer information elements may be used to configure information about the three time periods, to reduce signaling consumption.

According to the communication method provided in this embodiment of this application, the terminal device does not need to maintain a bandwidth greater than the bandwidth of the active BWP. Therefore, more energy can be saved. In comparison with an existing measurement gap mechanism, data transmission interruption time is shorter, and impact on a transmission rate of the terminal device is reduced.

Different embodiments described above may be used in combination or separately. In addition, a relationship between steps of each embodiment is not forcibly limited, that is, not all steps are mandatory, and some of the steps may be selected according to actual requirements for implementation.

To implement the functions in the methods provided in embodiments of this application, the network device, the terminal device, or the communication apparatus may include a hardware structure and/or a software module, and the functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

As shown in FIG. 8, an embodiment of this application further provides an apparatus 800. The communication apparatus 800 may be the terminal device in FIG. 1, and is configured to implement the method for the terminal device in the foregoing method embodiments. Alternatively, the communication apparatus may be the network device in FIG. 1, and is configured to implement the method corresponding to the network device in the foregoing method embodiments. For specific functions, refer to descriptions of the foregoing method embodiments.

Specifically, the apparatus 800 may include a processing unit 810 and a communication unit 820. In this embodiment of this application, the communication unit may also be referred to as a transceiver unit, and may include a sending unit and/or a receiving unit, which are respectively configured to perform sending and receiving steps of the network device or the terminal device in the foregoing method embodiments. The following describes in detail a communication apparatus provided in embodiments of this application with reference to FIG. 8 to FIG. 9.

In some possible implementations, behavior and functions of the terminal device in the foregoing method embodiments may be implemented by using the communication apparatus 800, for example, the methods performed by the terminal device in the embodiments in FIG. 4A and FIG. 6. The communication apparatus 800 may be a terminal device, or may be a component (for example, a chip or a circuit) used in the terminal device, or may be a chip or a chip set in the terminal device or a part that is of the chip and that is configured to perform a related method function. The communication unit 820 may be configured to perform a receiving or sending operation performed by the terminal device in the embodiment shown in FIG. 4A, and the processing unit 810 may be configured to perform an operation other than the receiving and sending operations performed by the terminal device in the embodiment shown in FIG. 4A. For example,

the communication unit is configured to receive configuration information of a first BWP, where the first BWP is an active BWP of the terminal device; and
the processing unit is configured to perform measurement without measurement gaps based on an SSB.

A frequency domain resource of the first BWP does not include a frequency domain resource of the SSB, or the frequency domain resource of the first BWP includes a part of frequency domain resources of the SSB.

In a possible implementation, the frequency domain resource of the first BWP and the frequency domain resource of the SSB are located on a same carrier.

In a possible implementation, the communication unit is further configured to perform first data transmission with a network device on the first BWP.

A time domain symbol occupied for the first data transmission and a time domain symbol occupied by the SSB overlap, partially overlap, or are adjacent to each other.

In a possible implementation, the measurement without measurement gaps includes at least one of the following: channel state information measurement, time-frequency synchronization measurement, radio resource management measurement, radio link monitoring measurement, radio link failure measurement, beam management measurement, and beam failure detection measurement.

In a possible implementation, the processing unit performs first data transmission and measurement without measurement gaps in a first bandwidth, where the first bandwidth includes the frequency domain resource of the first BWP and the frequency domain resource of the SSB.

In some possible implementations, behavior and functions of the network device in the foregoing method embodiments may be implemented by using the communication apparatus 800, for example, the methods performed by the network device in the embodiments in FIG. 4A and FIG. 6. For example, the communication apparatus 800 may be a network device, or may be a component (for example, a chip or a circuit) used in the network device, or may be a chip or a chip set in the network device or a part that is of the chip and that is configured to perform a related method function. The communication unit 820 may be configured to perform a receiving or sending operation performed by the network device in the embodiment shown in FIG. 4A, and the processing unit 810 may be configured to perform an operation other than the receiving and sending operations performed by the network device in the embodiment shown in FIG. 4A. For example,

the processing unit is configured to send first configuration information to a terminal device by using the communication unit, where a first time period indicated by the first configuration information is used to perform measurement without measurement gaps based on an SSB; and

the communication unit is further configured to perform first data transmission with the terminal device on the first BWP.

The first BWP is an active BWP of the terminal device, and a frequency domain resource of the first BWP does not include a frequency domain resource of the SSB, or a frequency domain resource of the first BWP includes a part of frequency domain resources of the SSB.

In a possible implementation, the frequency domain resource of the first BWP and the frequency domain resource of the SSB are located on a same carrier.

In a possible implementation, a time domain symbol occupied for the first data transmission and a time domain symbol occupied by the SSB overlap, partially overlap, or are adjacent to each other.

In a possible implementation, the measurement without measurement gaps includes at least one of the following: channel state information measurement, time-frequency synchronization measurement, radio resource management measurement, radio link monitoring measurement, radio link failure measurement, beam management measurement, and beam failure detection measurement.

It should be understood that descriptions of the apparatus embodiments correspond to descriptions of the method embodiments. For apparatus structures used to implement the terminal device and the network device in FIG. 4A to FIG. 6, refer to the apparatus 800. Therefore, for content that is not described in detail, refer to the foregoing method embodiments. For brevity, details are not described herein again.

The communication unit may also be referred to as a transceiver module, a transceiver, a transceiver machine, a transceiver apparatus, or the like. The processing unit may also be referred to as a processor, a processing board, a processing module, a processing apparatus, or the like. Optionally, a component that is in the communication unit 820 and that is configured to implement a receiving function may be considered as a receiving unit, and a component that is in the communication unit 820 and that is configured to implement a sending function may be considered as a sending unit, in other words, the communication unit 820 includes a receiving unit and a sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

The foregoing is merely an example. The processing unit 810 and the communication unit 820 may further perform other functions. For more detailed descriptions, refer to the related descriptions in the method embodiments shown in FIG. 4A to FIG. 6. Details are not described herein.

FIG. 9 shows an apparatus 900 according to an embodiment of this application. The apparatus shown in FIG. 9 may be an implementation of a hardware circuit of the apparatus shown in FIG. 8. The communication apparatus is applicable to the foregoing flowcharts, and performs functions of the terminal device or the network device in the foregoing method embodiments. For ease of description, FIG. 9 shows only main components of the communication apparatus.

FIG. 9 is a diagram of a structure of a communication apparatus according to an embodiment of this application. It should be noted that a part represented by a dashed box in FIG. 9 is optional, and details are not described in the following.

The communication apparatus 900 includes one or more processors 901. The processor 901 may be configured to perform internal processing of the apparatus, to implement a specific control processing function. Optionally, the processor 901 includes instructions 903. Optionally, the processor 901 may store data. Optionally, the processor 901 may be a general-purpose processor, a dedicated processor, or the like. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 further includes one or more memories 902, configured to store instructions 904. Optionally, the memory 902 may further store data. The processor and the memory may be separately disposed, or may be integrated together.

Optionally, the communication apparatus 900 may further include a transceiver 905 and/or an antenna 906. The transceiver 905 may be configured to send information to another apparatus or receive information from another apparatus.

Optionally, the communication apparatus 900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. The components may be implemented by hardware, software, or a combination of software and hardware.

The processor 901 executes the instructions stored in the communication apparatus 900, in other words, the instructions stored in the communication apparatus may be run on the processor 901, so that the communication apparatus 900 performs the methods described in the foregoing embodiments. Optionally, the instructions are instructions 903 in the processor, or the instructions are instructions 904 in the memory.

In embodiments of this application, the instructions may also be a computer program, code, program code, a program, an application program, software, or an executable file. For example, a computer program or code stored in the communication apparatus 900. Other parts are not described herein again.

When the communication apparatus 900 is configured to implement the method shown in FIG. 4A, the processor 901 is configured to execute the computer program or the instructions stored in the memory to perform a function of the terminal device or the network device in the foregoing method embodiments. Specifically, the processor 901 may be configured to implement a function of the processing unit 810. An interface circuit 902 is configured to receive a signal from a communication apparatus other than the communication apparatus, and transmit the signal to the processor, or send a signal from the processor to a communication apparatus other than the communication apparatus. Specifically, may be configured to implement a function of the communication unit 820.

The processor in embodiments of this application may be a central processing unit (Central Processing unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device or a transistor logic device. The general-purpose processor may be a microprocessor or any regular processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Alternatively, the processor and the storage medium may exist in a network device or a terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program or the instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

## Claims

**1.** A communication method, comprising:

receiving, by a terminal device, configuration information of a first bandwidth part BWP, wherein the first BWP is an active BWP of the terminal device; and
performing, by the terminal device, measurement without measurement gaps based on a synchronization signal block SSB, wherein
a frequency domain resource of the first BWP does not comprise a frequency domain resource of the SSB, or a frequency domain resource of the first BWP comprises a part of frequency domain resources of the SSB.

**2.** The method according to claim 1, wherein the method further comprises:
receiving measurement configuration information from a network device, wherein the measurement configuration information does not comprise configuration information of a measurement gap, or the measurement configuration information comprises configuration information of a measurement gap, and the configuration information of the measurement gap indicates that the measurement gap is 0 milliseconds.

**3.** The method according to claim 1 or 2, wherein the frequency domain resource of the first BWP and the frequency domain resource of the SSB are located on a same carrier.

**4.** The method according to any one of claims 1 to 3, wherein the method further comprises: performing, by the terminal device, first data transmission with the network device on the first BWP, wherein
a time domain symbol occupied for the first data transmission and a time domain symbol occupied by the SSB overlap, partially overlap, or are adjacent to each other.

**5.** The method according to any one of claims 1 to 4, wherein the measurement without measurement gaps comprises at least one of the following: channel state information measurement, time-frequency synchronization measurement, radio resource management measurement, radio link monitoring measurement, radio link failure measurement, beam management measurement, and beam failure detection measurement.

**6.** The method according to any one of claims 1 to 5, wherein
the terminal device supports the measurement without measurement gaps in a first bandwidth, and the first bandwidth comprises the frequency domain resource of the first BWP and the frequency domain resource of the SSB.

**7.** The method according to claim 6, wherein

a size of the first bandwidth is less than a maximum bandwidth supported by the terminal device; and/or
the first bandwidth is less than a bandwidth size of the carrier.

**8.** The method according to claim 6 or 7, wherein the size of the first bandwidth is 20 MHz, 40 MHz, 60 MHz, or 80 MHz.

**9.** The method according to any one of claims 6 to 8, wherein the method further comprises:

receiving, by the terminal device, configuration information of the first bandwidth from the network device, wherein the configuration information of the first bandwidth indicates the size and/or a location of the first bandwidth; and
determining, by the terminal device, the first bandwidth according to a first rule, wherein the first rule indicates a location relationship among the frequency domain resource of the first BWP, the frequency domain resource of the SSB, and a frequency domain range of the first bandwidth.

**10.** The method according to any one of claims 6 to 9, wherein the size of the first bandwidth does not exceed a first threshold, and the first threshold is predefined, or the first threshold is configured by the network device.

**11.** The method according to any one of claims 1 to 10, wherein a spacing between the frequency domain resource of the first BWP and the frequency domain resource of the SSB does not exceed a second threshold, and the second threshold is predefined, or the second threshold is configured by the network device.

**12.** The method according to claim 11, wherein the method further comprises at least one of the following:

sending, by the terminal device, first capability information to the network device, wherein the first capability information indicates the first threshold and/or the second threshold supported by the terminal device; or
sending, by the terminal device, second capability information to the network device, wherein the second capability information indicates that the terminal device supports the measurement without measurement gaps.

**13.** The method according to any one of claims 1 to 12, wherein

the method further comprises: receiving, by the terminal device, first configuration information, wherein the first configuration information indicates a first time period; and
the performing, by the terminal device, measurement without measurement gaps based on an SSB comprises:
performing, by the terminal device, measurement without measurement gaps based on the SSB in the first time period.

**14.** The method according to claim 13, wherein
a start moment of the first time period is an end moment of a second time period, an end moment of the first time period is a start moment of a third time period, and the second time period and the third time period are not used by the terminal device to perform data transmission.

**15.** The method according to claim 14, wherein the first configuration information further indicates the second time period and the third time period.

**16.** The method according to claim 14 or 15, wherein the first configuration information indicates at least one of a periodicity, a length, and a time domain offset of the first time period.

**17.** A communication method, comprising:

sending, by a network device, first configuration information to a terminal device, wherein the first configuration information indicates a first time period, and the first time period is a time period in which the terminal device performs measurement without measurement gaps based on an SSB; and
performing, by the network device, first data transmission with the terminal device on a first BWP, wherein
the first BWP is an active BWP of the terminal device, and a frequency domain resource of the first BWP does not comprise a frequency domain resource of the SSB, or a frequency domain resource of the first BWP comprises a part of frequency domain resources of the SSB.

**18.** The method according to claim 17, wherein the method further comprises:
sending measurement configuration information to the terminal device, wherein the measurement configuration information does not comprise configuration information of a measurement gap, or the measurement configuration information comprises configuration information of a measurement gap, and the configuration information of the measurement gap indicates that the measurement gap is 0 milliseconds.

**19.** The method according to claim 17 or 18, wherein the frequency domain resource of the first BWP and the frequency domain resource of the SSB are located on a same carrier.

**20.** The method according to any one of claims 17 to 19, wherein a time domain symbol occupied for the first data transmission and a time domain symbol occupied by the SSB overlap, partially overlap, or are adjacent to each other.

**21.** The method according to any one of claims 17 to 20, wherein the measurement without measurement gaps comprises at least one of the following: channel state information measurement, time-frequency synchronization measurement, radio resource management measurement, radio link monitoring measurement, radio link failure measurement, beam management measurement, and beam failure detection measurement.

**22.** The method according to any one of claims 17 to 21, wherein the method further comprises:

sending, by the network device, configuration information of a first bandwidth to the terminal device, wherein the configuration information of the first bandwidth indicates a size and/or a location of the first bandwidth, wherein
the first bandwidth comprises the frequency domain resource of the first BWP and the frequency domain resource of the SSB.

**23.** The method according to claim 22, wherein

the size of the first bandwidth is less than a maximum bandwidth supported by the terminal device; and/or
the first bandwidth is less than a bandwidth size of the carrier.

**24.** The method according to claim 22 or 23, wherein the size of the first bandwidth is 20 MHz, 40 MHz, 60 MHz, or 80 MHz.

**25.** The method according to any one of claims 22 to 24, wherein the size of the first bandwidth does not exceed a first threshold, and the first threshold is predefined, or the first threshold is configured by the network device.

**26.** The method according to any one of claims 22 to 25, wherein a spacing between the frequency domain resource of the first BWP and the frequency domain resource of the SSB does not exceed a second threshold, and the second threshold is predefined, or the second threshold is configured by the network device.

**27.** The method according to claim 26, wherein the method further comprises at least one of the following:

receiving, by the network device, first capability information from the terminal device, wherein the first capability information indicates the first threshold and/or the second threshold supported by the terminal device; or
receiving, by the network device, second capability information from the terminal device, wherein the second capability information indicates that the terminal device supports the measurement without measurement gaps.

**28.** The method according to any one of claims 17 to 27, wherein
a start moment of the first time period is an end moment of a second time period, an end moment of the first time period is a start moment of a third time period, and the second time period and the third time period are not used by the terminal device to perform data transmission.

**29.** The method according to claim 28, wherein the first configuration information further indicates the second time period and the third time period.

**30.** The method according to claim 28 or 29, wherein the first configuration information indicates at least one of a periodicity, a length, and a time domain offset of the first time period.

**31.** A communication apparatus, wherein the communication apparatus comprises a processor, and the processor is configured to run a computer program or instructions, to enable the communication apparatus to perform the communication method according to any one of claims 1 to 16.

**32.** A communication apparatus, wherein the communication apparatus comprises a processor, and the processor is configured to run a computer program or instructions, to enable the communication apparatus to perform the communication method according to any one of claims 18 to 30.

**33.** A computer-readable storage medium, wherein the computer-readable storage medium stores computer instructions or a program, and when the computer instructions or the program are run on a computer, the communication method according to any one of claims 1 to 16 is performed, or the communication method according to any one of claims 18 to 30 is performed.

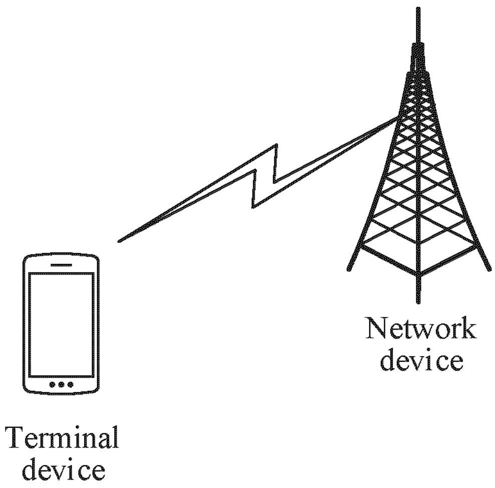
Network
device
Terminal
device

FIG. 1

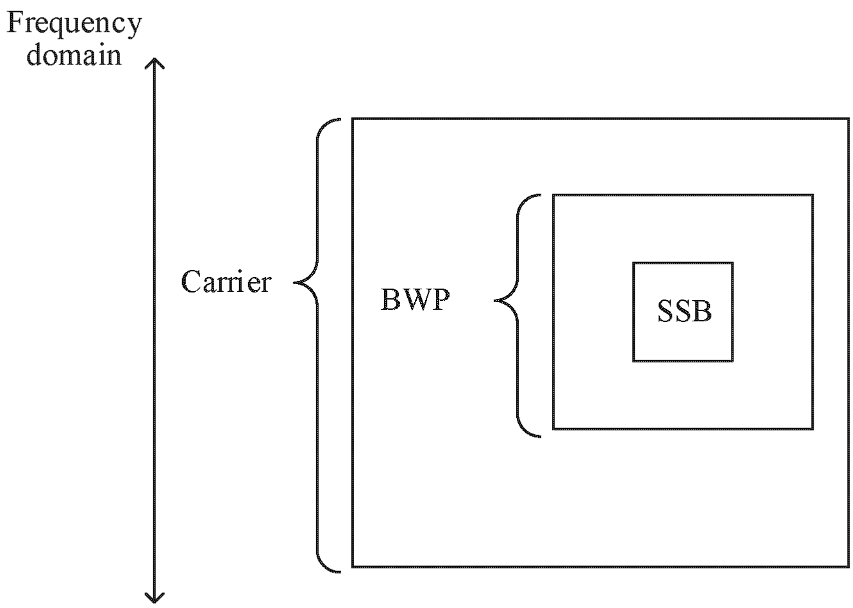
Frequency
domain
Carrier
BWP
SSB

FIG. 2A

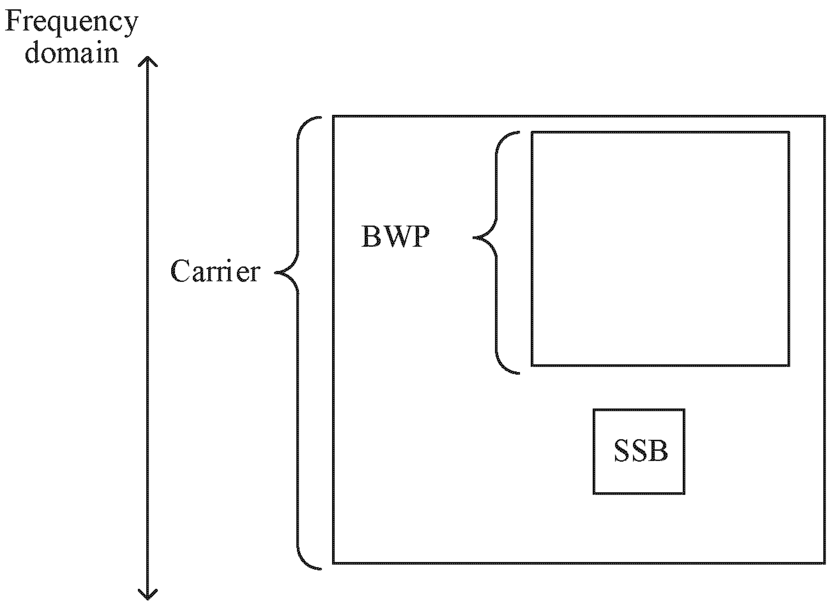
Frequency domain
Carrier
BWP
SSB

FIG. 2B

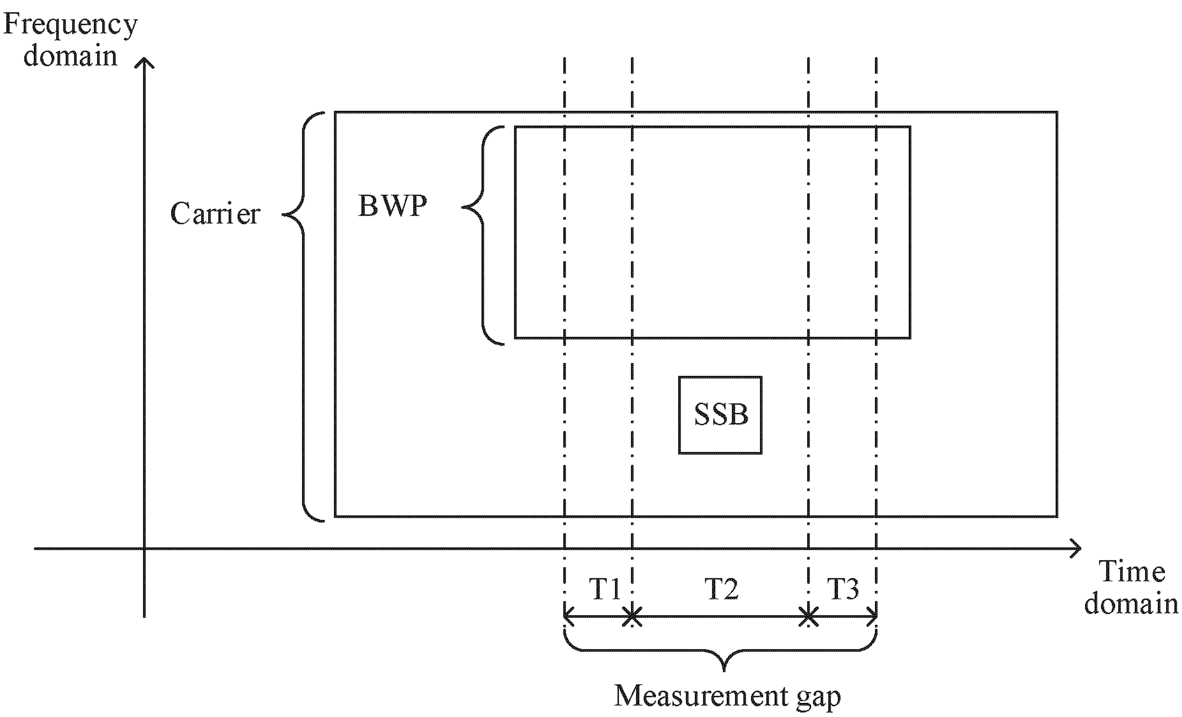
Frequency domain
Carrier
BWP
SSB
Time domain
T1
T2
T3
Measurement gap

FIG. 3

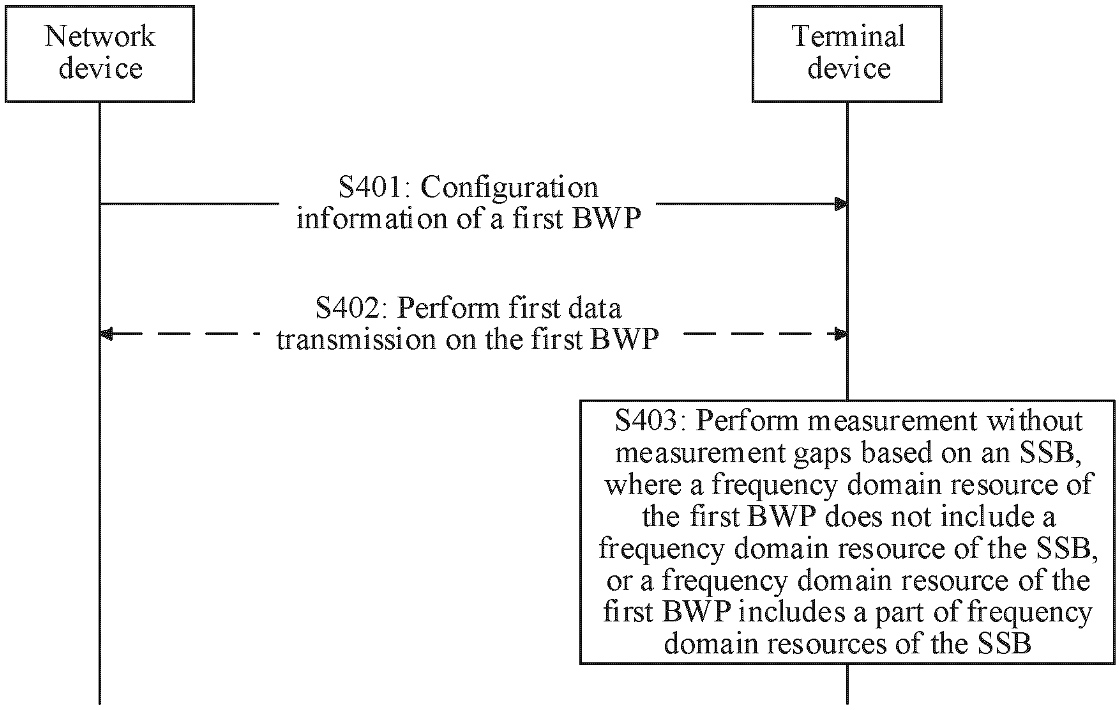
Network device
Terminal device
S401: Configuration information of a first BWP
S402: Perform first data transmission on the first BWP
S403: Perform measurement without measurement gaps based on an SSB, where a frequency domain resource of the first BWP does not include a frequency domain resource of the SSB, or a frequency domain resource of the first BWP includes a part of frequency domain resources of the SSB

FIG. 4A

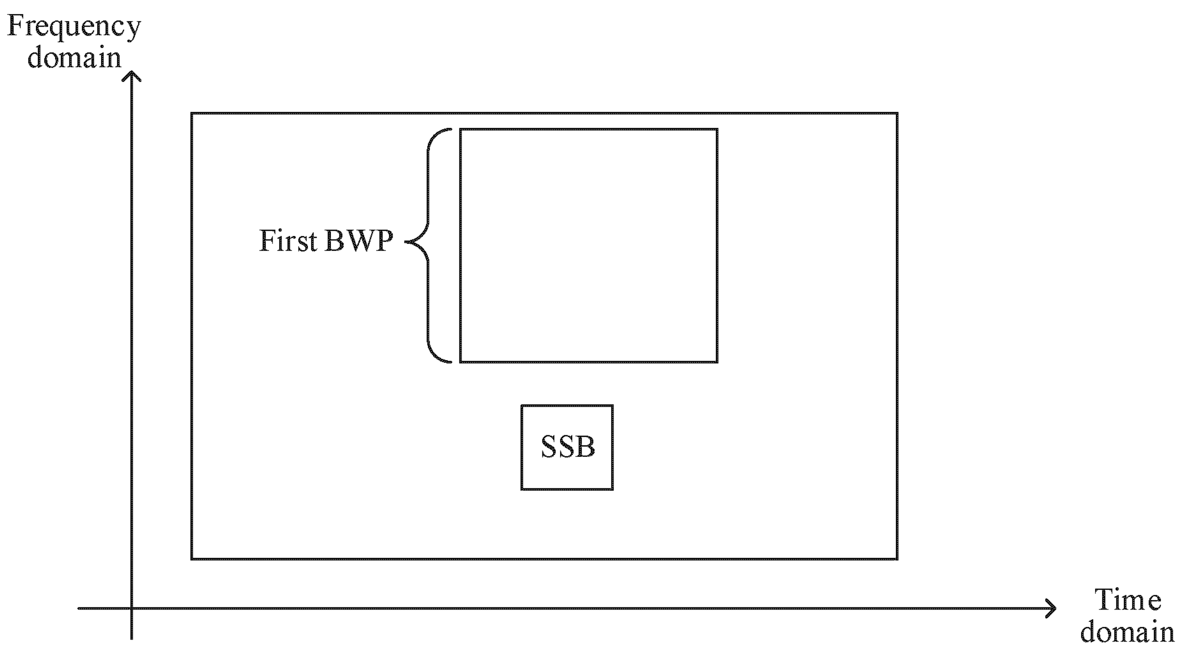
Frequency domain
First BWP
SSB
Time domain

FIG. 4B

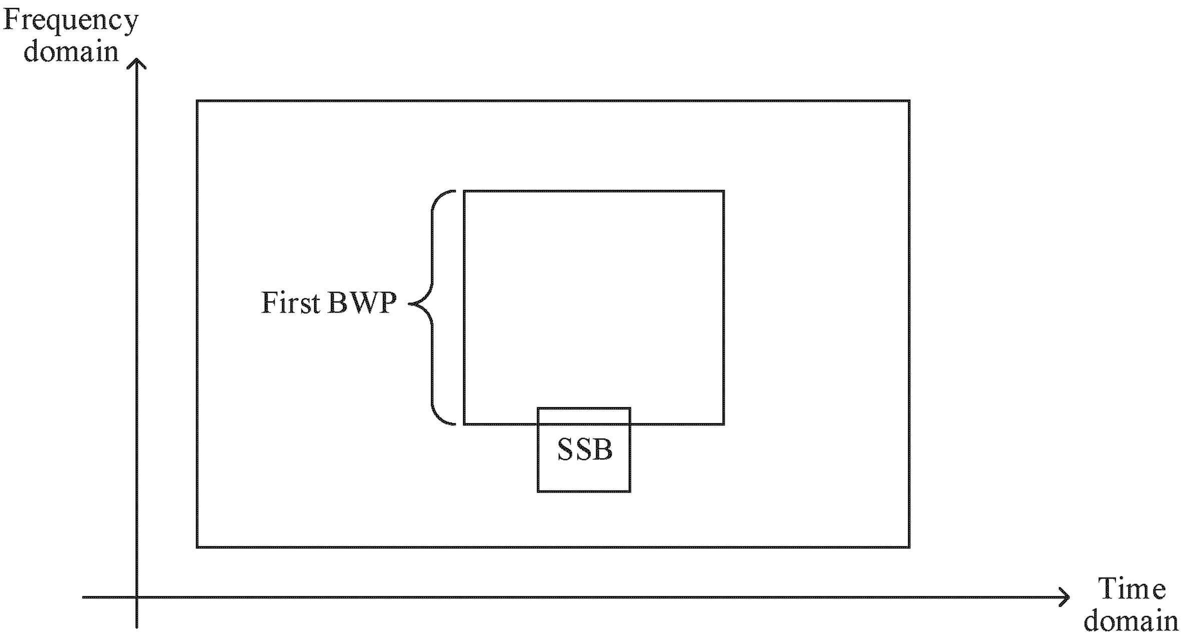
Frequency domain
First BWP
SSB
Time domain

FIG. 4C

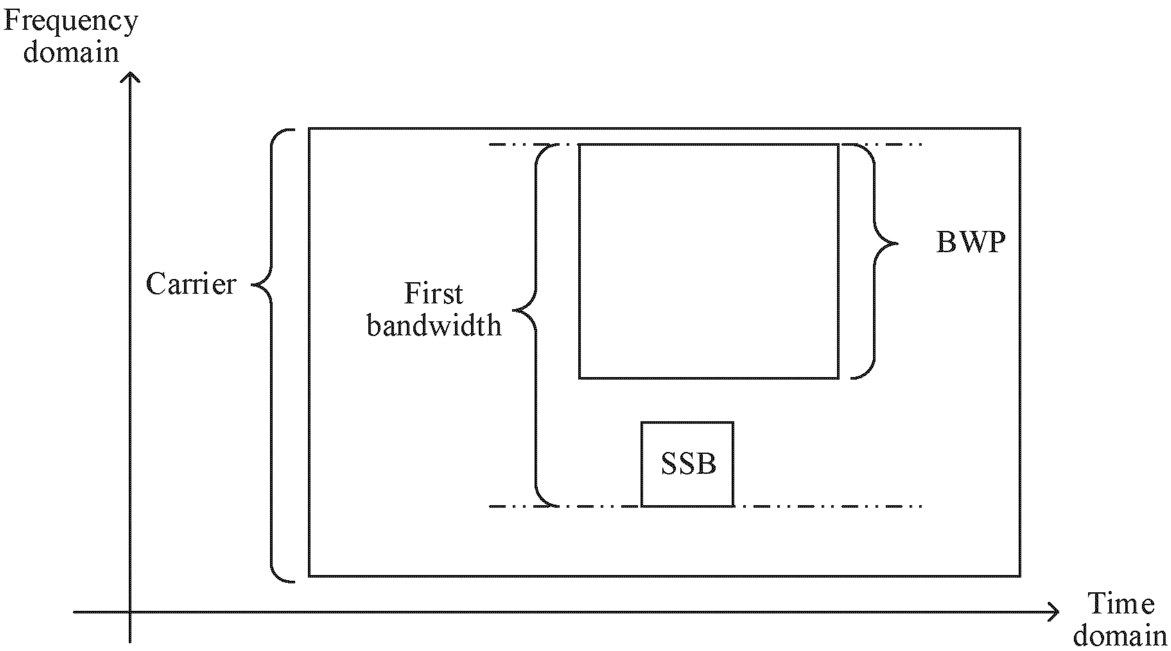
Frequency domain
Carrier
First bandwidth
BWP
SSB
Time domain

FIG. 5A

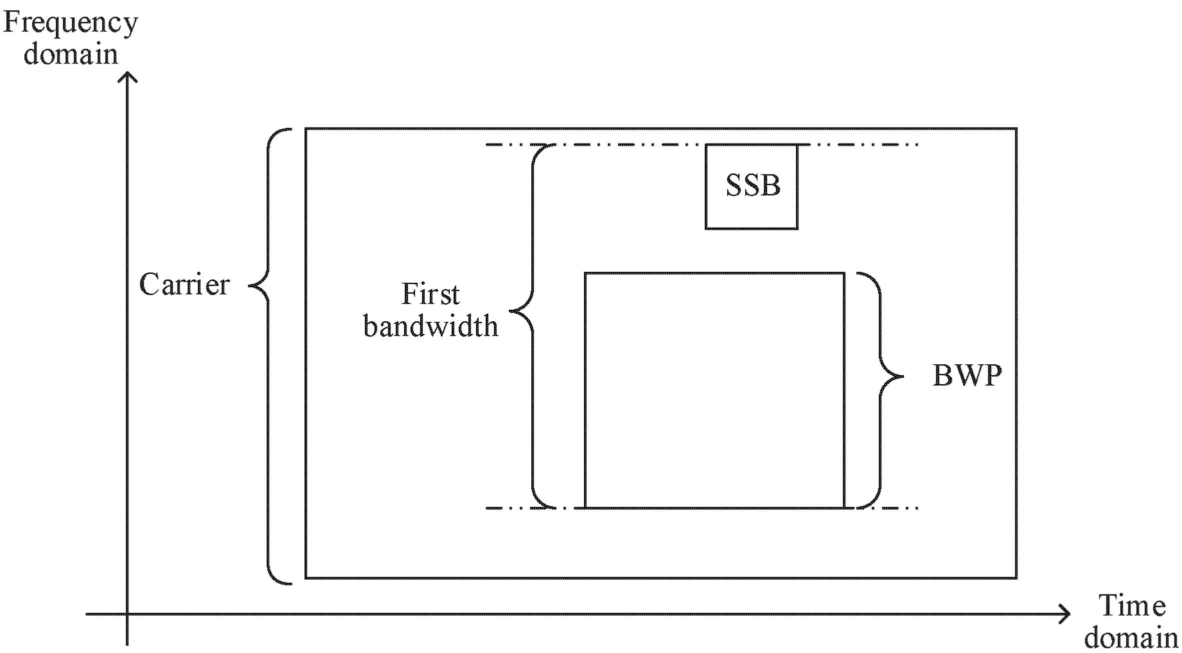
Frequency
domain
Carrier
First
bandwidth
SSB
BWP
Time
domain

FIG. 5B

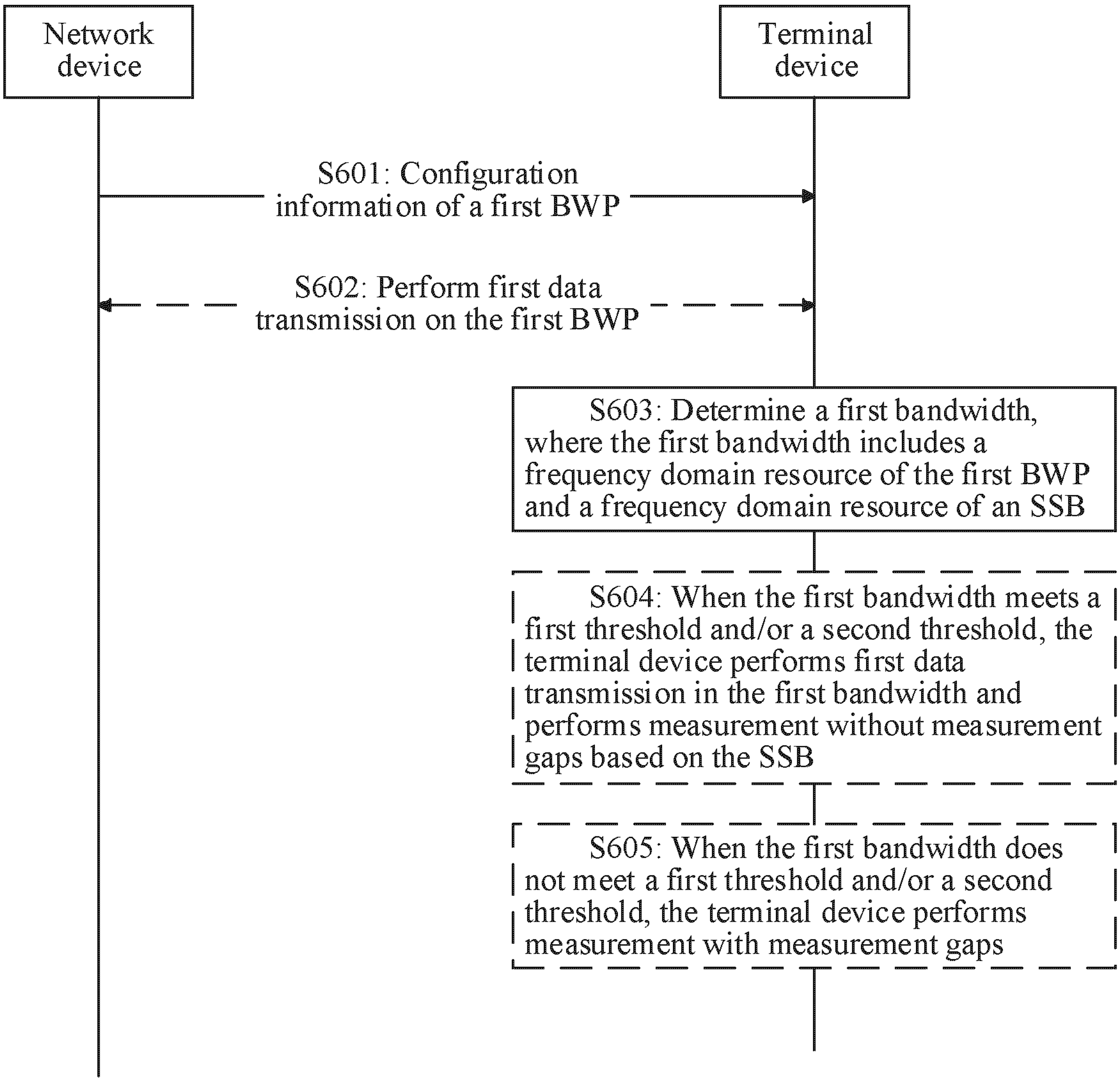

Network device
Terminal device
S601: Configuration information of a first BWP
S602: Perform first data transmission on the first BWP
S603: Determine a first bandwidth, where the first bandwidth includes a frequency domain resource of the first BWP and a frequency domain resource of an SSB
S604: When the first bandwidth meets a first threshold and/or a second threshold, the terminal device performs first data transmission in the first bandwidth and performs measurement without measurement gaps based on the SSB
S605: When the first bandwidth does not meet a first threshold and/or a second threshold, the terminal device performs measurement with measurement gaps


FIG. 6

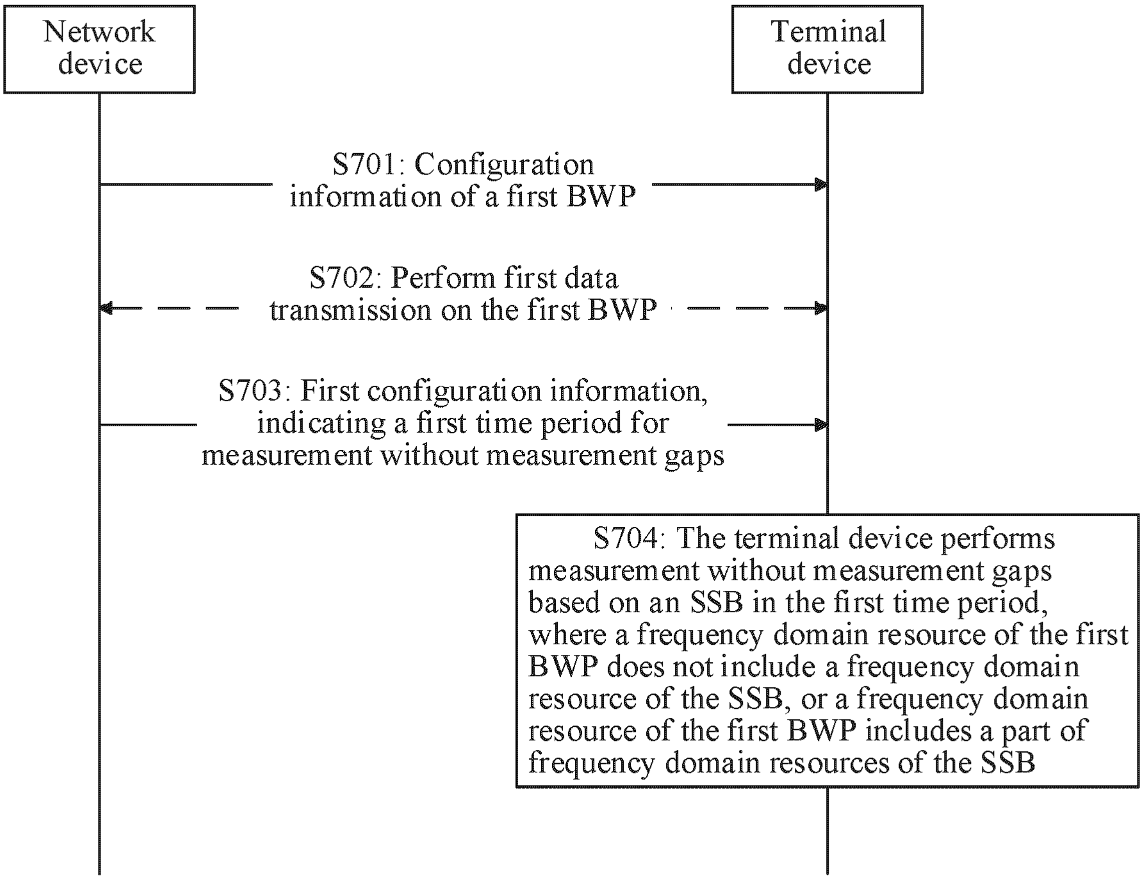
Network device
Terminal device
S701: Configuration information of a first BWP
S702: Perform first data transmission on the first BWP
S703: First configuration information, indicating a first time period for measurement without measurement gaps
S704: The terminal device performs measurement without measurement gaps based on an SSB in the first time period, where a frequency domain resource of the first BWP does not include a frequency domain resource of the SSB, or a frequency domain resource of the first BWP includes a part of frequency domain resources of the SSB

FIG. 7

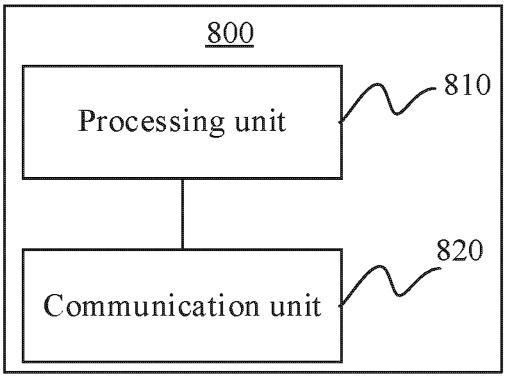
800
Processing unit
810
Communication unit
820

FIG. 8

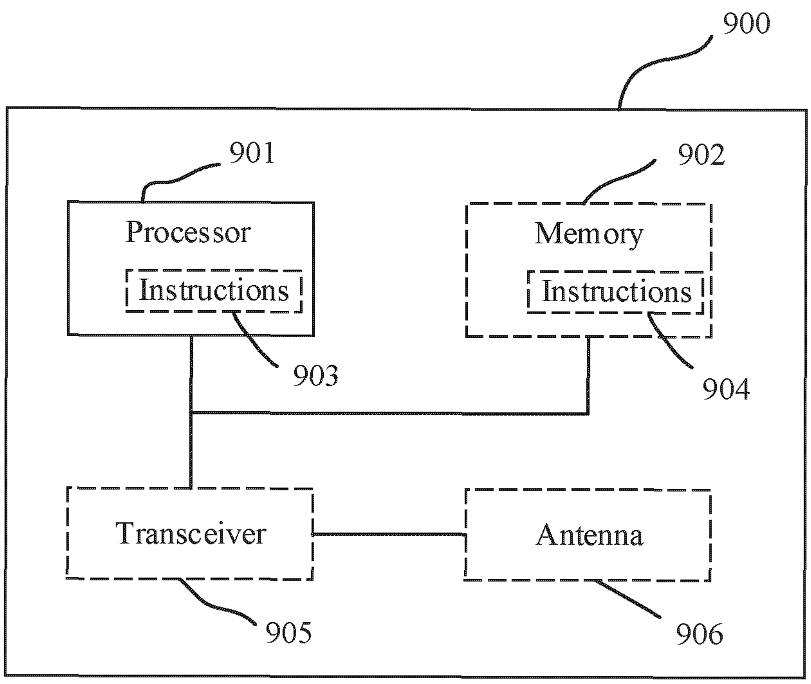
900
901
Processor
Instructions
902
Memory
Instructions
903
904
Transceiver
Antenna
905
906

FIG. 9

**INTERNATIONAL SEARCH REPORT**

International application No. **PCT/CN2023/110192**

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXTC, WPI, CNKI: 之外, 操作, 活动, 激活, 测量, 带宽部分, 间隔, 间隙, 同步信号块, 无间隔, outside, active, BWP, gap, gapless, interval, measurement, SSB

**C. DOCUMENTS CONSIDERED TO BE RELEVANT**

| Category* | Citation of document, with indication, where appropriate, of the relevant passages | Relevant to claim No. |
|---|---|---|
| Y | MEDIATEK INC. "Report of [AT109bis-e][049][TEI16] Need for Gap (Mediatek)" *3GPP TSG-RAN WG2 Meeting #109bis-e R2-200xxxx,* 30 April 2020 (2020-04-30), section 2.3 | 1-33 |
| Y | WO 2022151382 A1 (HUAWEI TECHNOLOGIES CO., LTD.) 21 July 2022 (2022-07-21) description, paragraphs 0094-0096 | 1-33 |
| A | CN 110798846 A (RESEARCH INSTITUTE OF CHINA MOBILE COMMUNICATIONS CORPORATION et al.) 14 February 2020 (2020-02-14) entire document | 1-33 |
| A | CN 110809894 A (LG ELECTRONICS INC.) 18 February 2020 (2020-02-18) entire document | 1-33 |
| A | US 2019239106 A1 (INTEL CORPORATION) 01 August 2019 (2019-08-01) entire document | 1-33 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 October 2023** | **20 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/110192**

| Patent document cited in search report | Publication date (day/month/year) | Patent family member(s) | Publication date (day/month/year) |
|---|---|---|---|
| WO 2022151382 A1 | 21 July 2022 | None | |
| CN 110798846 A | 14 February 2020 | None | |
| CN 110809894 A | 18 February 2020 | KR 20200003197 A | 08 January 2020 |
| | | WO 2019031791 A1 | 14 February 2019 |
| | | US 2020169340 A1 | 28 May 2020 |
| | | EP 3629617 A1 | 01 April 2020 |
| | | JP 2020528685 A | 24 September 2020 |
| US 2019239106 A1 | 01 August 2019 | US 2019373496 A1 | 05 December 2019 |

Form PCT/ISA/210 (patent family annex) (July 2022)